# EUROPEAN PATENT APPLICATION

(11) **EP 2 607 045 A1**
(43) Date of publication of application: **26.06.2013**
(21) Application number: 11195102.6
(22) Date of filing: 22.12.2011
(51) Int. Cl.: B29C 45/26

(54) **Die stamper assembly, injection compression moulding apparatus and method for manufacturing of optical information carriers**

(71) Applicant: Axxicon Moulds Eindhoven B.V., 5692 HN Son (NL)
(72) Inventor: Verhoeven, Hendricus Johannes, 5738 BC Mariahout (NL); van Asseldonk, Wilhelmus Gerardus, 5348 EH Oss (NL); van de Wouw, Richard Johanns Cornelis Petrus, 5682 EJ Best (NL)
(74) Representative: Raukema, Age

(57) **Abstract**

The invention relates to a die stamper assembly comprising a first die part for mounting a stamper, a second die part, the first die part cooperating with the second die part to define a mould cavity between the first and second die parts, and a venting ring configured around and moveable with respect to the second die part and defining an outer boundary of the mould cavity. The die stamper assembly further comprises an actuator arranged to move the venting ring from a first position to a second position when the second die part is moving towards the first die part for closing the mould cavity and to move the venting ring from the second position to the first position when the second die part moves away from the first die part to open the mould cavity.

## Description

### Field of the invention

The present invention is related to a die stamper assembly, an injection compression moulding apparatus and a method of manufacturing of plastic optical information carriers.

The die stamper assembly is used in an injection compression moulding apparatus for manufacturing of optical data carriers, for example, audio disc CD, CD-R,DVD, DVD-R, blu ray optical disc (BD) and BD-R. The known injection compression moulding apparatus comprises the known die stamper assembly comprising a first die part for mounting a stamper and a second die part coopering with the first die part to define a mould cavity between the first and second die parts. The second die part is moveable with respect to the first die part. The first and second die part are also known in the art as mirrors. Furthermore, the die stamper assembly comprises a venting ring configured around and moveable with respect to the second die part to define an outer boundary of the mould cavity. The stamper comprises a disc of nickel (Ni) provided with a relief comprises a spiral series of pits in order to form a corresponding series of elevations or depressions in a central data past of the disc representing CD or BD data. The stamper remains attached to the first die part via a stamper holder and via vacuum channels which have apertures in the boundaries of the first die part. Furthermore, the venting ring positioned with respect to the second die part by a number of springs and is moveable in an axial direction relatively to the first die part and second die part to allow moving the second die part towards the first die part, when the mould cavity is reduced during the injection compression moulding process to provide a side of the disc with the data. After the injection step the second die part is moved away from the first die part to release the disc. During the movement of the second die part the venting ring may move in an uncontrolled way because the venting ring may stick to the border of the disc. The moulded disc may then be warped into a dish shape. Severe requirements are placed on the flatness of the disc and it may be that due the warping the disc does not meet the specifications. In order to improve the quality the cycle time of injection moulding can be enlarged to allow for a larger period of cooling the disc before releasing it so that the disc is less vulnerable to deformations. However, this solution reduces the capacity in disc per hour of the injection moulding apparatus. It is an object of the invention to provide an injection moulding apparatus which produces an optical data carrier with a higher quality.

In order to achieve this object a first aspect of the invention provides a die stamper assembly comprising a first die part for mounting a stamper, a second die part, the first die part cooperating with the second die part to define a mould cavity between the first and second die parts, and a venting ring configured around and moveable with respect to the second die part and defining an outer boundary of the mould cavity, wherein the die stamper assembly further comprises an actuator arranged to move the venting ring from a first position to a second position when the second die part is moving towards the first die part for closing the mould cavity and to move the venting ring from the second position to the first position when the second die part moves away from the first die part to open the mould cavity.

The invention is based on the insight that introducing an actuator enables a controlled movement of the venting ring so that the venting ring can be moved from the first position to the second position closer to the first die part when the second die part moves to the first die part to close the moulding cavity and the venting ring can be moved back to the first position when the second die part is moved from the first die part to open the cavity for releasing the disc. When the venting ring is removed from the circumference of the disc, the disc remains in a flat arrangement with the second die part. If the venting ring has arrived in the first position and the second die part has been moved away from the first die part, the disc can then be released from the second die part, for example by an ejector bush. Because the venting ring has now been removed from the circumference of the disc the disc the risk that the disc will be warped is reduced. A further advantage is that the disc can be released faster from the second die part compared to the time the disc should remain on the second die part in a known injection moulding apparatus, because the time to cool down the disc before the disc can be released can be reduced. This enables a shorter cycle time and increases the capacity of the injection moulding apparatus. Furthermore, the risk of burs on the discs is reduced. Moreover, in case the venting ring sticks to the second die part the actuator can push the venting ring against the additional resistance induced by this sticking towards the second position which reduces the risk on failures in the injection-moulding apparatus.

In an embodiment the actuator comprises an annular cylinder and an annular piston cooperating with the annular cylinder, wherein the cylinder and the piston are arranged to receive a fluid for moving the venting ring from the first position to the second position. The fluid can be an hydraulic liquid, air or nitrogen. The annular cylinder and the cooperating annular piston enable a compact drive of the venting ring around the centre of the second die part.

In a further embodiment the annular cylinder is provided with a gate for receiving a pressurized fluid.

In a still further embodiment the die stamper assembly comprises a sealing between the annular cylinder and the annular piston. The sealing between the cylinder and the piston reduces leakage of fluid through the gap between the piston and the cylinder.

In a still further embodiment the second die part is provided with through holes between the annular piston and the venting ring and the actuator comprises multiple bars arranged between the annular piston and the venting ring for mechanically coupling the annular piston with the venting ring. The bars transfer axial forces between the annular piston and the second die part. Furthermore, in this arrangement the venting ring, the bars and the annular piston can be detachably connected.

In a still further embodiment the actuator comprises a biasing device arranged for exerting a biasing force on the venting ring in the direction of the second die part. The biasing force enables movement of the venting ring and the annular piston from the second position to the first position and holds the venting ring, the bars and the annular piston in its first position and prevents unwanted movements of these parts when the second die part is disassembled from the injection moulding apparatus.

In a still further embodiment the biasing device comprises a first set of springs between a first face of the venting ring facing the second die part and the second die part for exerting a first force in an axial direction towards the second die part.

In a still further embodiment the biasing device comprises a second set of springs between a second side of the venting ring opposite to the second face and the second die part for exerting a second force in a direction opposite the first force, the second force being larger that the first force for delivering the bias force on the venting ring towards the second die part. The arrangement with the first and second set of springs between respectively the annular piston and the second die part and the second die part and the venting ring provides a biasing force to the venting ring in axial direction towards the first die part.

In an other embodiment the die stamper assembly comprises a retainer ring to define the second position of the venting ring. The retainer ring establish a barrier to determine the second position of the venting ring.

In an other embodiment opposed circumferential faces of second die part and the venting ring are provided with a wear resistant layer. The wear resistant layer enables a small gap between an inner circumferential face of the venting ring and an outer circumferential face of the second die part. At room temperature this gap is about 0.01 mm. Under operating conditions this gap will be smaller than 0.001 mm. Furthermore, this wear resistant layer reduces friction during movement of the venting ring with respect to the second die part. The wear resistant layer comprises, for example, a hard metal layer of about 0.125 mm comprising Wolfram(W), carbon (C) and cobalt (Co) in a composition well known to a person skilled in the art.

In an other embodiment a circumferential part of the venting ring is provided with protrusions arranged to support the venting ring on a mirror portion of the first die part outside the stamper. In this arrangement the protrusions of the venting ring touches the mirror of the first die part outside the stamper, when the moulding cavity is closed, such that the venting ring does not touch the stamper attached to the first die part. An advantage of this arrangement is that the stamper cannot wear due to the repeated touching of the venting ring on the stamper, as in a conventional die stamper assembly and the life of the stamper is improved.

The invention also relates to an injection moulding apparatus comprising a die stamper assembly as claimed in any of the claims 1 to 12.

The invention also relates to a method of manufacturing an optical data carrier comprising the provision of a disc with a side provided with data, wherein the provision of the disc involves injection compression moulding, characterized in that a die stamper assembly according to any of the claims 1-12 is used for injection compression moulding the disc.

These and other aspects of the invention will be elucidated with reference to the embodiments described hereinafter and with reference to the accompanied drawing wherein.

### Brief description of drawing

Fig.1 shows diagrammatically a side view of an embodiment of a die stamper assembly for manufacturing optical data carriers,
Fig. 2 shows a detail of a circumferential portion of the venting ring provided with a protrusion,
Fig. 3 shows diagrammatically a cross-section of the second die part,
Fig. 4 shows an arrangement of the annular piston , the bars and the venting ring in the second die part, and
Fig. 5 shows a first detail I of the second die part shown in Fig. 3.

### Detailed description of preferred embodiments

In the figures the same reference numbers indicate like or similar parts.

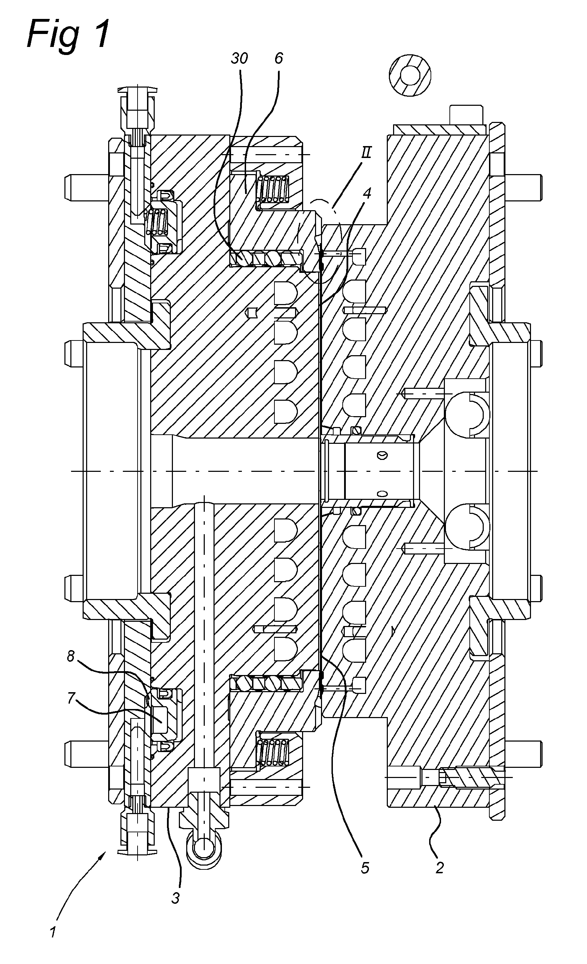

Fig. 1 shows diagrammatically a side view of an embodiment of a die stamper assembly 1 according the invention for use in a injection compressing moulding apparatus for manufacturing optical data carriers. The optical data carrier can be a audio disc CD, CD-R,DVD, DVD-R, Blu Ray optical disc (BD) and BD-R. The die stamper assembly 1 can be used in a conventional injection compression moulding apparatus. The die stamper assembly 1 is provided with a first die part 2 and a second die part 3. The first and second die parts 2, 3 cooperate together to form a cylindrical mould cavity 4 between the first and second die parts. A stamper 5 is mounted at a boundary or mirror of the first die part 2. The outer boundary of the mould cavity 4 is formed between the stamper 5, the second die part 3 and a venting ring 6. The venting ring 6 can be moveably mounted around the second die part 3 via an axial bearing 30. Furthermore, the die stamper assembly 1 comprises an actuator 7,8 to move the venting ring 6 from a first position to a second position before closing the moulding cavity, when the second die part is moving towards the first die part and to move the venting ring from the second position to the first position, when the second die part moves away from the first disc part to open the mould cavity. In the first position the venting ring is resting on the second die part 3. In the second position the venting ring 6 is resting on the mirror of the first die part 2. The venting ring 6 is still moveable when the moulding cavity 4 is closed. Furthermore, a circumferential portion at a side of the venting ring facing the first die part 2 is provided with protrusions 34, which, when the moulding cavity is closed touches on the mirror of the first die part 2 outside the stamper 5.

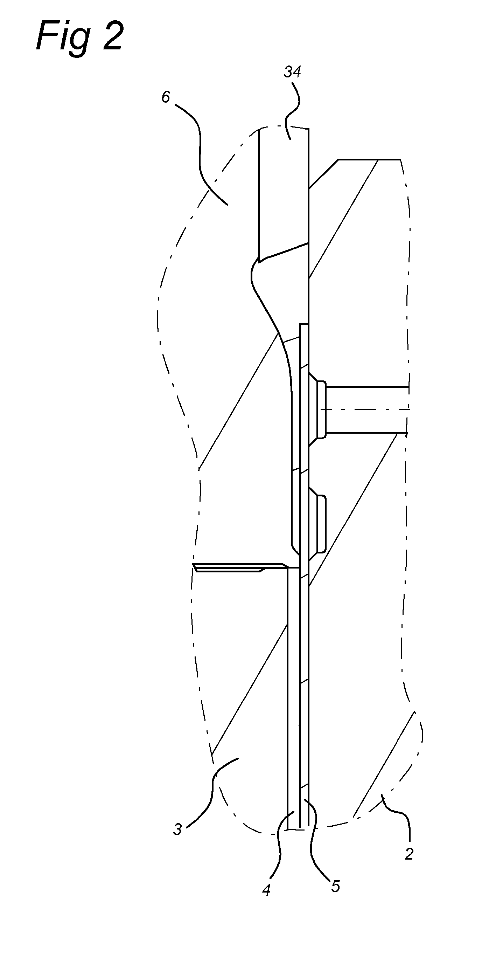

Fig. 2 shows a detail of a circumferential portion of the venting ring 6 provided with a protrusion 34, that in a closed position of the moulding cavity 4 touches on the mirror of the first die part 2 outside the stamper 5.

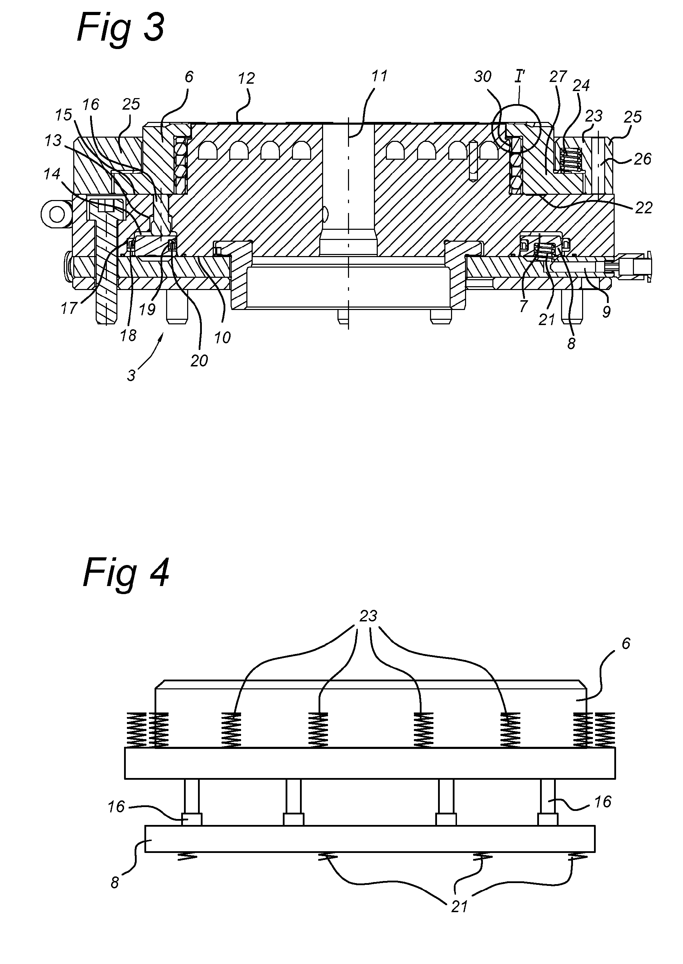

Fig. 3 shows an enlarged cross-section of the second die part 3 of Fig. 1. The actuator comprises an annular cylinder 7 and an annular piston or ring 8 cooperating with the annular cylinder, wherein the annular cylinder 7 and the annular piston 8 are arranged to receive a pressurized fluid for moving the venting ring 6 from the first position towards to the second position. Furthermore, the annular cylinder 7 is provided with a gate 9 for receiving the fluid, for example compressed air. The supply of compressed air to the gate 9 can be controlled, for example, via a programmable logic controller with electronically controlled valves (not shown). In operation, the venting ring 6 can now be moved from the first position to the second position by moving the annular piston 8 . The annular cylinder or annular slot is provided at a face 10 of the second die part 3 opposite of a mirror 12 of the second die part 3, whereby the centre of the annular cylinder 7 coincides with a central axis 11 of the second die part 3 and the centre of the venting ring 6. The annular piston 8 that cooperates with the annular cylinder 7 is moveably mounted inside the annular cylinder7. Furthermore, the second die part 3 is provided with through holes 13. The through holes 13 are provided in the second die part 3 in an axial direction between a first face 14 of the annular cylinder 7 and a second face 15 of the second die part opposite the venting ring 6. Furthermore, the through holes 13 are regularly distributed around the circumference of the annular cylinder. The number of through holes can be for example 8. The angle between two adjacent positions of the through holes is then 45°. Furthermore, the second die part 3 comprises multiple bars 16, respectively, moveably mounted in the through holes 13 arranged between the annular piston 8 and the venting ring 6 for mechanically coupling the annular piston 8 with the venting ring 6. In this embodiment each through hole 13 comprises a single bar 16.

Fig.4 shows an arrangement of the annular piston 8, the bars 16 and the venting ring 6 in the second die part 3. In fig. 4 the second die part is deleted for clarity.

In an embodiment of the die stamper assembly an outer circumferential wall of the annular cylinder 7 can be provided with a first annular chamber 17 extending radially outwards from the annular cylinder for holding a first sealing ring 18 between the circumferential wall of the annular cylinder 7 and the circumferential wall of the annular piston 8. The first sealing ring 18 can be, for example, an Omniseal type, such as delivered by Eriks, Nederland. The Omniseal can be provided with an external casing of PTFE and a inner casing of stainless steel that fits in the outer casing. Furthermore, an inner circumferential wall of the annular piston 8 is provided with a second annular chamber 19 extending radially inwards in the annular piston 8 for holding a second sealing ring 20 between the inner circumferential wall of the annular piston and an inner circumferential wall of the annular cylinder 7. The second sealing ring 20 can be, for example, of a similar type as the first sealing ring 18. This sealing reduces the gap between the annular cylinder 7 and the annular piston 8 to reduce air leakage and to maintain a sufficient pressure of the compressed air to move and maintain the annular piston 8 is in the second position, thereby closing the moulding cavity 4..

Furthermore, the die stamper assembly 1 comprises a biasing device (21,23) arranged for exerting a biasing force on the venting ring 6 towards the second die part to move the annular piston and the venting ring 6 from the second position to the first position and to keep the annular piston 8, the bars 16 and venting ring 6 in the first position when the die stamper assembly 1 is disassembled from the injection moulding apparatus.

In an embodiment the biasing device comprises a first set of first springs 21 between the annular piston 8 and the second die part 3. The annular piston 8 is coupled to a first face 22 of the venting ring 6 facing the second die part 3 via the bars 16. So, the first springs 21 are located between the first face 22 of the venting ring and the second die part for exerting a first force in an axial direction away from the second die part. Furthermore, a second set of second springs 23 between a second face 24 of the venting ring 6 opposite to the first face 22 of the venting ring 6 and the second die part for exerting a second force in a direction opposite the first force, the second force being larger that the first force for delivering the bias force on the venting ring 6 towards the second die part. Fig. 4 also shows the first springs 21 and the second springs 23 arranged with respect to the venting ring 6.

In the second position of the venting ring 6, when the moulding cavity is closed, the protrusions 34 of the venting ring 6 touches the first die part 2 outside the area of the stamper 5. The stamper 5 is in this embodiment not touched by the venting ring and the life of the stamper 5 is improved.

Furthermore, the second die part 3 may comprise a retainer ring 25 in order to mount the venting ring 6, the first and second sets of springs 21,23, the bars 16 at the second die part in the second die part. The inner circumferential wall of the retainer ring 25 is provided with a radial recess 26. The depth of the recess 26 in an axial direction is larger than a thickness of an radially outward extending flange 27 of the venting ring 6. This depth of the recess 26 defines a space wherein the venting ring 6 can be moved between the first and the second position.. The first position is defined when the venting ring is pressed against the second die part and the second position of the venting ring 6 is defined when the venting ring is pressed by the piston and the bars against the retainer ring 25.

The first die part 2, the second die part 3, the venting ring 6, the retainer ring 25, the bars 16 and the annular piston 8 can be manufactured from stainless steel.

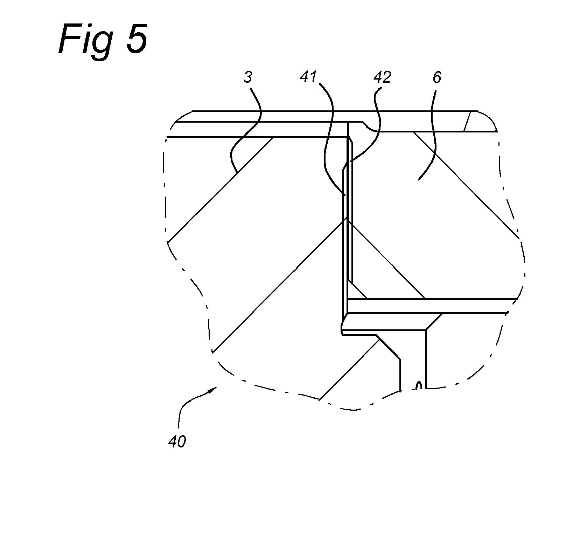

Fig. 5 shows a further detail 40 of the second die part 3 and the venting ring 6. The outer circumferential wall of the second die part 3 directly opposed to an inner circumferential wall of the venting ring 6 is provided with a first wear resistant layer 41, for example a layer of hard metal comprising Cobalt (Co), Wolfram (W) and carbon (C) in a composition well known to a person skilled in the art. Also the inner circumferential wall of the venting ring 6 facing the outer circumferential wall of the second die part is provided with a second wear resistant layer 42, for example, a second layer of hard metal of an identical composition as that of the first hard metal layer 41. The first and second wear resistant layers 41,42 allow a smaller gap between the venting ring 6 and the mirror of the second die part 3. This smaller gap reduces the risk that molten plastic can enter the gap between the venting ring 6 and the mirror of the second die part 3 and burs are introduced when the moulded disc is removed from the second die part. At room temperature this gap can be about 0.015 mm. At operating temperatures this gap is reduced to almost zero and the wear resistant layers reduce a friction during movement of the venting ring with respect to the second die part. The die stamper assembly 1 can be applied in a conventional injection compression moulding process, known to a person skilled in the art, for the manufacturing of disc parts for optical data carriers, for example, a CD, CD-R, DVD, DVD-R, BD or BD-R disc.

The die stamper assembly can be mounted in a conventional injection moulding apparatus. In operation, a cycle of steps is executed for moulding the disc: moving the venting ring from the first position to the second position, moving the second die part to the first die part to close the moulding cavity, injecting plastic in the moulding cavity for moulding a disc, moving the venting ring from the second position the first position, moving the second die part away from the first die part, removing the disc.

## Claims

1. A die stamper assembly (1) comprising a first die part (2) for mounting a stamper (5), a second die part (3), the first die part cooperating with the second die part to define a mould cavity (4) between the first and second die parts, and a venting ring (6) configured around and moveable with respect to the second die part (3) and defining an outer boundary of the mould cavity (4), wherein the die stamper assembly further comprises an actuator (7, 8) arranged to move the venting ring (6) from a first position to a second position when the second die part (3) is moving towards the first die part (2) for closing the mould cavity and to move the venting ring from the second position to the first position when the second die part (3) moves away from the first die part (2) to open the mould cavity.

2. A die stamper assembly according to claim 1, wherein the actuator comprises an annular cylinder (7) and an annular piston (8) cooperating with the annular cylinder, wherein the cylinder and the piston are arranged to receive a fluid for moving the venting ring from the first position to the second position.

3. A die stamper assembly according to claim 2, wherein the annular cylinder (7) comprises a gate (9) for receiving a pressurized fluid.

4. A die stamper assembly according to claim 6, wherein the die stamper assembly comprises a sealing (18,20) between the annular cylinder (7) and the annular piston (8).

5. A die stamper assembly according to claim 1, wherein the second die part (3) is provided with through holes (13) between the annular piston (8) and the venting ring (6) and comprises multiple bars (16) moveably mounted in the through holes for mechanically coupling the annular piston (8) with the venting ring (6).

6. A die stamper assembly according any of the claim 2 -7, wherein the actuator comprises a biasing device (21,23) arranged for exerting a biasing force on the venting ring (6) in the direction of the second die part (3).

7. A die stamper assembly according to claim 8, wherein the biasing device comprises a first set of first springs (21) between a first face (22) of the venting ring (6) facing the second die part (3) and the second die part for exerting a first force in an axial direction away from the second die part.

8. A die stamper assembly according to claim 9, wherein the biasing device comprises a second set of second springs (23) between a second face (24) of the venting ring opposite to the first face of the venting ring (6) and the second die part for exerting a second force in a direction opposite the first force, the second force being larger that the first force for delivering the bias force on the venting ring towards the second die part.

9. A die stamper assembly according to claim 1-10, wherein the die stamper assembly comprises a retainer ring (25) to define the second position of the venting ring.

10. A die stamper assembly according to any of the preceding claims, wherein opposed circumferential faces of second die part and the venting ring are provided with wear resistant layers (41,42).

11. A die stamper assembly according to claim 11 or 12, wherein the wear resistant layer (41,42) comprises hard metal.

12. A die stamper assembly according to any of the preceding claims, wherein a circumferential part of the venting ring is provided with protrusions (34) arranged to support the venting ring (6) on a mirror portion of the first die part (2) outside the stamper (5).

13. Injection compression moulding apparatus comprising a die stamper assembly (1) as claimed in any of the preceding claims.

14. Method of manufacturing an optical data carrier comprising the provision of a disc with a side provided with data, wherein the provision of the disc involves injection compression moulding, wherein a die stamper assembly (1) according to any of the claims 1-12 is used for injection compression moulding the disc.
